Europäisches Patentamt

European Patent Office

Office européen des brevets

(11) Veröffentlichungsnummer: **0 462 470 B1**

## EUROPÄISCHE PATENTSCHRIFT

(45) Veröffentlichungstag der Patentschrift: **09.08.95**

(51) Int. Cl.[6]: **C08L 51/04**, //(C08L51/04, 81:04)

(21) Anmeldenummer: **91109403.5**

(22) Anmeldetag: **08.06.91**

(54) **Thermostabile Formmassen aus ABS-Polymerisaten und Polyarylensulfiden.**

(30) Priorität: **21.06.90 DE 4019801**

(43) Veröffentlichungstag der Anmeldung:
**27.12.91 Patentblatt 91/52**

(45) Bekanntmachung des Hinweises auf die
Patenterteilung:
**09.08.95 Patentblatt 95/32**

(84) Benannte Vertragsstaaten:
**DE ES FR GB IT**

(56) Entgegenhaltungen:

**PATENT ABSTRACTS OF JAPAN, Band 13,
Nr. 145 (C-583)[3493], 10. April 1989; & JP-
A-63 304 046**

(73) Patentinhaber: **BAYER AG**

**D-51368 Leverkusen (DE)**

(72) Erfinder: **Eichenauer, Herbert, Dr.**
**Gustav-Heinemann-Strasse 3**
**W-4047 Dormagen 1 (DE)**
Erfinder: **Wittmann, Dieter, Dr.**
**Wolfskaul 4**
**W-5000 Köln 80 (DE)**
Erfinder: **Ott, Karl-Heinz, Dr.**
**Paul-Klee-Strasse 54**
**W-5090 Leverkusen 1 (DE)**
Erfinder: **Pischtschan, Alfred, Dr.**
**Zur Eiche 33**
**W-5067 Kürten (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 462 470 B1

**Beschreibung**

Die Erfindung betrifft Formmassen auf Basis von ABS-Polymerisaten mit hoher Thermostabilität und verbessertem Rohton.

ABS-Formmassen sind Zweiphasenkunststoffe aus

1.) einem thermoplastischen Copolymerisat harzbildender Monomerer z.B. Styrol und Acrylnitril, wobei das Styrol ganz oder teilweise durch α-Methylstyrol oder Methylmethacrylat ersetzt werden kann; dieses Copolymerisat, auch als SAN-Harz oder Harz-Matrix bezeichnet, bildet die äußere Phase;

2.) mindestens einem Pfropfpolymerisat, welches hergestellt worden ist durch Polymerisation eines oder mehrerer harzbildender Monomerer, z.B. der unter 1.) genannten, in Gegenwart eines Kautschuks, z.B. Butadienhomo- oder -copolymerisat ("Pfropfgrundlage"). Dieses Pfropfpolymerisat ("Elastomerphase" oder "Pfropfkautschuk") bildet die disperse Phase im Matrixharz.

Die Polymerisate 1.) und 2.) können nach bekannten Verfahren, wie Emulsions-, Lösungs-, Masse-, Suspensions-, Fällungspolymerisation oder durch Kombination solcher Verfahren hergestellt werden.

Bei der Verarbeitung dieser ABS-Polymerisate, insbesondere bei hohen Verarbeitungstemperaturen, kommt es häufig zu unerwünschten Verfärbungen oder zu einem dunkleren Rohton des Polymeren. Diese Verfärbungen können zu Problemen bei der Einfärbung des Polymeren führen, insbesondere dann, wenn eine farbgenaue Einstellung gefordert wird.

Um die Thermostabilität zu verbessern oder die Verfärbung zu verhindern, kann man geeignete Stabilisatoren zusetzen. Dies ist z.B. in EP-B-0 176 811 (Zusatz von Benzoin bzw. Benzoinderivaten) beschrieben.

Der Zusatz von als Stabilisatoren wirkenden niedermolekularen organischen Verbindungen erhöht in der Regel auch die Menge an flüchtigen Bestandteilen im Polymeren, was Oberflächenstörungen an den daraus hergestellten Formteilen oder Ablagerungen in der Form oder im Verarbeitungsaggregat zur Folge haben kann. Durch die Stabilisatorverbindungen können auch die Polymereigenschaften verschlechtert, z.B. die Oberflächenhärte reduziert, der E-Modul vermindert oder die Wärmeformbeständigkeit verringert werden.

Aufgabe dieser Erfindung ist es, ABS-Polymerisat-Formmassen herzustellen, die auch nach der Verarbeitung zum fertigen Formteil eine sehr helle Eigenfarbe aufweisen. Dabei sollen die sonstigen Eigenschaften der Polymerisate nicht oder nur minimal verändert werden.

Es wurde gefunden, daß dies durch Zusatz von geringen Mengen Polyarylensulfid gelingt.

Gegenstand der Erfindung sind demnach thermoplastische Formmassen aus einem ABS-Polymerisat und 0,1 bis 1 Gew.-% (bezogen auf ABS-Polymerisat).

Im einzelnen bestehen die erfindungsgemäßen thermoplastischen Formmassen vorzugsweise aus

I. 100 Gew.-Teilen eines ABS-Polymerisats bestehend aus

    1.) 5-100 Gew.-Teilen eines Pfropfmischpolymerisats, hergestellt durch Pfropfpolymerisation von

        1.1) 5-90 Gew.-% einer Mischung von

            1.1.1.) 5-50 Gew.-% Acrylnitril, Methacrylnitril, Maleinsäureanhydrid N-substituiertem Maleinimid oder Mischungen daraus und

            1.1.2) 95-50 Gew.-% Styrol, α-Methylstyrol, kernsubstituiertem Styrol, Methylmethacrylat oder Mischungen daraus auf

        1.2) 95-10 Gew.-% eines Kautschukes mit einer Glasübergangstemperatur $T_G$ < 10 °C und

    2.) 0-95 Gew.-% eines Thermoplastharzes, hergestellt durch Polymerisation von

        2.1.)5-50 Gew.-% Acrylnitril, Methacrylnitril, Maleinsäureanhydrid, N-substituiertem Maleinmid oder Mischungen daraus und

        2.2) 95-50 Gew.-% Styrol, α-Methylstyrol, kernsubstituiertem Styrol, Methylmethacrylat oder Mischungen daraus und

II. 0,1 bis 1 Gew.-Teilen Polyarylensulfid.

ABS-Polymerisate im Sinne der Erfindung enthalten 5 bis 100 Gew.-%, vorzugsweise 5 bis 80 Gew.-%, eines Pfropfpolymerisats und 95 bis 0 Gew.-%, vorzugsweise 95 bis 20 Gew.-%, eines thermoplastischen Copolymerharzes. Pfropfpolymerisate im Sinne der Erfindung sind solche, in denen auf einen Kautschuk Styrol oder Methylmethacrylat oder eine Mischung von 95 bis 50 Gew.-% Styrol, α-Methylstyrol, kernsubstituiertes Styrol, Methylmethacrylat oder Mischungen daraus und 5 bis 50 Gew.-% Acrylnitril, Methacrylnitril, Maleinsäureanyhdrid, N-substituierte Maleinimide oder Mischungen daraus pfropfpolymerisiert sind. Geeignete Kautschuke sind praktisch alle Kautschuke mit Glasübergangstemperaturen ≦ 10 °C, vorzugsweise solche die Butadien einpolymerisiert enthalten. Beispiele sind Polybutadien, Styrol-Butadien-Copolymerisate, Acrylnitril-Butadien-Copolymerisate, Acrylatkautschuke, gegebenenfalls mit eingebauten, von Butadien abgeleiteten Struktureinheiten, Acrylatkautschuke, die einen vernetzten Kautschuk wie Polybutadien oder einem Copolymerisat von Butadien mit einem ethylenisch ungesättigten Monomer, wie Styrol und/oder

2

Acrylnitril als Kern enthalten.

Bevorzugt ist Polybutadien.

Die Pfropfpolymerisate enthalten 10 bis 95 Gew.-%, insbesondere 20 bis 70 Gew.-%, Kautschuk und 90 bis 5 Gew.-%, insbesondere 80 bis 30 Gew.-%, pfropfcopolymerisierte Monomere. Die Kautschuke liegen in diesen Pfropfcopolymerisaten in Form wenigstens partiell vernetzter Teilchen eines mittleren Teilchendurchmessers ($d_{50}$) von 0,05 bis 20,0 $\mu$m, bevorzugt von 0,1 bis 2,0 $\mu$m und besonders bevorzugt von 0,1 bis 0,8 $\mu$m, wobei der mittlere Teilchendurchmesser $d_{50}$ mittels Ultrazentrifugenmessung (W. Scholtan, H. Lange, Kolloid Z. und Z. Polymere 250 (1972), 782-796) bestimmt werden kann.

Geeignete Pfropfcopolymerisate können durch radikalische Pfropfcopolymerisation von Styrol, $\alpha$-Methylstyrol, kernsubstituiertem Styrol, Acrylnitril, Methacrylnitril, Methylmethacrylat, Maleinsäureanhydrid, N-substituiertem Maleinimid oder Mischungen daraus in Gegenwart der zu bepfropfenden Kautschuke hergestellt werden. Bevorzugte Herstellungsverfahren für Pfropfcopolymerisate sind Emulsions-, Lösungs, Masse- oder Suspensionspolymerisation.

Die thermoplastischen Copolymerisate können aus den auf den Kautschuk pfropfpolymerisierten Monomeren (Pfropfmonomeren) oder ähnlichen Monomeren gewonnen werden, insbesondere aus Styrol, $\alpha$-Methylstyrol, p-Methylstyrol, Halogenstyrol, Acrylnitril, Methacrylnitril, Methylmethacrylat, Maleinsäureanhydrid, Vinylacetat, N-substituierten Maleinimiden oder Mischungen daraus. Bevorzugt sind Copolymerisate aus 95 bis 50 Gew.-% Styrol, $\alpha$-Methylstyrol, Methylmethacrylat oder Mischungen daraus mit 5 bis 50 Gew.-% Acrylnitril, Methacrylnitril, Methylmethacrylat, Maleinsäureanhydrid oder Mischungen daraus. Solche Copolymerisate entstehen auch bei der Pfropfcopolymerisation entsprechender Monomerer als Nebenprodukte, weil die Pfropfpolymerisation nicht vollständig ist. Es ist üblich, neben den im Pfropfpolymerisat enthaltenen Copolymeren noch getrennt hergestellte Copolymere zuzumischen. Diese müssen nicht mit den in den Pfropfpolymeren vorliegenden ungepfropften Harzanteilen chemisch identisch sein.

Besonders bevorzugte thermoplastische Copolymerisate enthalten 20 bis 40 Gew.-% Acrylnitril und 80 bis 60 Gew-% Styrol oder $\alpha$-Methylstyrol einpolymerisiert. Diese Copolymerisate sind bekannt. Sie besitzen vorzugsweise Molekulargewichte von 15 000-200 000.

Erfindungsgemäß geeignete Polyarylensulfide umfassen Polymere, die im wesentlichen aus Phenyleinheiten bestehen, welche über Sulfidgruppen aneinander gebunden sind. Sie können durch die Formel

-(Ar-S)$_n$-

dargestellt werden, wobei Ar ein substituierter oder unsubstituierter Phenylrest und n wenigstens 50 ist. Geeignete Ausgangsverbindungen und Herstellungsvefahren sind beispielsweise in den US-Patentschriften 3 354 129 und 3 919 177 beschrieben.

Die Polyphenylensulfide können in linearer, verzweigter oder vernetzter Form vorliegen.

Üblicherweise werden polyhalogenierte aromatische Verbindungen mit schwefelhaltigen Verbindungen in polaren organischen Lösungsmitteln, gegebenenfalls in Gegenwart von Katalysatoren, umgesetzt.

Geeignete polyhalogenierte aromatische Verbindungen zur Synthese der Polyarylensulfide sind beispielsweise 1,2-Dichlorbenzol, 1,3-Dichlorbenzol, 1,4-Dichlorbenzol, 2,5-Dichlortoluol, 1,4-Dibrombenzol, 2,5-Dibromanilin und Mischungen daraus. Sollen verzweigte Polyarylensulfide hergestellt werden, müssen mindestens 0,05 Mol.-% der polyhalogenierten aromatischen Verbindungen Tri- oder Tetrahalogenaromaten, wie 1,2,4-Trichlorbenzol, 1,3,5-Trichlorbenzol oder 1,2,4,5-Tetrachlorbenzol sein.

Geeignete schwefelhaltige Verbindungen zur Synthese der Polyarylensulfide sind Alkalisulfide wie beispielsweise Natrium- oder Kaliumsulfid. Vorzugsweise werden auch die Hydrate dieser Alkalisulfide eingesetzt. Die Alkalisulfide können auch aus Hydrogensulfiden mit Hilfe von Alkalihydroxiden wie Lithiumhydroxid, Natriumhydroxid oder Kaliumhydroxid erzeugt werden.

Als polare Lösungsmittel sind beispielsweise N-Methylpyrrolidon, N-Ethylpyrrolidon, N-Methylcaprolactam, N-Ethylcaprolactam oder 1,3-Dimethylimidazolidinon geeignet.

Als Katalysatoren können Substanzen wie beispielsweise Alkalifluoride, Alkaliphosphate oder Alkalicarboxylate in Mengen von 0,02 bis 1,0 Mol pro Alkalisulfid eingesetzt werden.

Bevorzugte Polyarylensulfide sind überwiegend aus p-Phenylensulfid-Einheiten aufgebaut.

Neben den erfindungsgemäßen Verbindungen können den Formmassen die üblichen Zusätze wie Pigmente, Füllstoffe, Stabilisatoren, Antistatika, Gleitmittel, Entformungsmittel, Flammschutzmittel und dergleichen zugesetzt werden.

Ein weiterer Gegenstand der Erfindung ist ein Verfahren zur Herstellung der erfindungsgemäßen ABS-Polymerisat-Formmassen.

Zu ihrer Herstellung gibt man 0,1 bis 1 Gew.-% (bezogen auf Formmasse) Polyarylensulfid zu dem oben beschriebenen ABS-Polymerisat und mischt es bei höheren Temperaturen, z.B. 100° bis 300°C ein, in üblichen Mischaggregaten, Knetern, Innenmischern, Walzenstühlen, Schneckenmaschinen oder Extrudern.

Dabei können die Verweilzeiten beim Vermischungsprozeß je nach Intensität der Durchmischung zwischen 10 Sekunden und 30 Minuten variieren.

Beispiele

Alle angegebenen Teile bedeuten Gewichtsteile.

1. Eingesetzte Komponenten

A) Pfropfkautschuke, aus 50 Gew.-% Polybutadien mit einem mittleren Teilchendurchmesser ($d_{50}$) von 0,4 $\mu$m, auf das 36 Gew.-% Styrol und 14 Gew.-% Acrylnitril pfropfpolymerisiert wurden.

B) Pfropfkautschuk, aus 50 Gew.-% Polybutadien mit einem mittleren Teilchendurchmesser ($d_{50}$) von 0,1 $\mu$m, auf das 36 Gew.-% Styrol und 14 Gew.-% Acrylnitril pfropfpolymerisiert wurden.

C) Styrol/Acrylnitril (SAN) = 72:28-Copolymerisat mit einem Molekulargewicht $\overline{M}_w$ (Gewichtsmittel) von ca. 115 000 mit U = $\overline{M}_w/\overline{M}_n$-1 $\leq$ 2 (molekulare Uneinheitlichkeit). $\overline{M}_n$ = Zahlenmittel des Molekulargewichts.

D) $\alpha$-Methylstyrol/Acrylnitril (AMSAN) = 72:28-Copolymerisat mit einem $\overline{M}_w$ von ca 77 000 mit U = $\overline{M}_w/\overline{M}_n$-1 $\leq$ 2 (molekulare Uneinheitlichkeit).

E) Lineares Poly-[p-phenylensulfid] mit einer Schmelzviskosität von 44 Pa•s, gemessen bei 306°C (1000 $Ds^{-1}$).

2. Herstellung und Ausprüfung der Formmassen

Die in Tabelle 1 in Gewichtsteilen angegebenen Mengen der einzelnen Polymerkomponenten wurden zusammen mit 0,1 Gew.-Teilen eines Silikonöls und 2 Gew.-Teilen Pentaerythrittetrastearat in einem Innenkneter bei 200°C bis 230°C innerhalb 3 bis 5 Minuten vermischt und das resultierende Gemisch granuliert und anschließend durch Spritzgießen bei 240°C und 280°C zu Formkörpern verarbeitet (75 Sekunden-Zyklus).

Die Kerbschlagzähigkeit $a_k$ (Einheit: $kJ/m^2$) wurde bei Raumtemperatur nach ISO 180 A, die Kugeldruckhärte $H_c$ (Einheit: $N/mm^2$) nach DIN 53 456, die Wärmeformbeständigkeit Vicat B (Einheit: °C) nach DIN 53 460 ermittelt. Die Beurteilung der Verarbeitbarkeit erfolgte durch Messung des Volumen-Fließindex MVI nach DIN 53 753U (Einheit: $cm^3$/10 min). Die Beurteilung des Rohtons wurde an ebenen Platten der Maße 60x40 x 2 mm durchgeführt, wobei der Rohton visuell gegen einen Standard (0) verglichen wurde. Dabei wurde folgende Klassifizierung benutzt:

$$
\left.
\begin{array}{ll}
-\,- & \text{sehr dunkel} \\
- & \text{dunkel} \\
0 & \text{vergleichbar} \\
+ & \text{hell} \\
++ & \text{sehr hell}
\end{array}
\right\} \quad \text{im Vergleich mit Standard (0)}
$$

Die resultierenden Ergebnisse sind in Tabelle 2 zusammengestellt.

Tabelle 1: Zusammensetzung der Formmassen

| Beispiel | A [Gew.-Teile] | B [Gew.-Teile] | C [Gew.-Teile] | D [Gew.-Teile] | E [Gew.-Teile] |
|---|---|---|---|---|---|
| 1 (Vergleich) | 40 | - | 60 | - | - |
| 2 | 40 | - | 60 | - | 0,1 |
| 3 | 40 | - | 60 | - | 0,5 |
| 4 | 40 | - | 60 | - | 1 |
| 5 (Vergleich) | 15 | 15 | - | 70 | - |
| 6 | 15 | 15 | - | 70 | 0,1 |
| 7 | 15 | 15 | - | 70 | 0,5 |
| 8 | 15 | 15 | - | 70 | 1 |

Tabelle 2: Prüfdaten der Formmassen

| Beispiel | $a_k$ (kJ/m²) | $H_c$ (N/mm²) | Vicat B (°C) | MVI (cm³/10min) | Rohton bei 240°C | 280°C |
|---|---|---|---|---|---|---|
| 1 (Vergleich) | 32 | 84 | 100 | 4,9 | 0 | - |
| 2 | 31 | 83 | 101 | 4,9 | + | + |
| 3 | 25 | 83 | 100 | 5,0 | ++ | + |
| 4 | 21 | 83 | 101 | 5,2 | ++ | ++ |
| 5 (Vergleich) | 24 | 98 | 109 | 1,7 | - | - |
| 6 | 23 | 97 | 112 | 1,7 | 0 | 0 |
| 7 | 19 | 99 | 113 | 1,7 | + | 0 |
| 8 | 16 | 99 | 112 | 1,6 | + | + |

**Patentansprüche**
**Patentansprüche für folgende Vertragsstaaten : DE, FR, GB, IT**

1. Thermoplastische Formmassen aus
   I. 100 Gew.-Teilen eines ABS-Polymerisates bestehend aus
      1.) 5 - 100 Gew.-% eines Pfropfmischpolymerisats, hergestellt durch Pfropfpolymerisation von
         1.1) 5 - 90 Gew.-% einer Mischung aus

**EP 0 462 470 B1**

1.1.1) 5 - 50 Gew.-% Acrylnitril, Methacrylnitril, Maleinsäureanhydrid, N-substituiertem Maleinimid oder Mischungen daraus und

1.1.2) 95 - 50 Gew.-% Styrol, α-Methylstyrol, kernsubstituiertem Styrol, Methylmethacrylat oder Mischungen daraus auf

1.2) 95 - 10 Gew.-% eines Kautschuks mit einer Glasübergangstemperatur $T_G$ < 10°C und

2.) 0 - 95 Gew.-% eines Thermoplastharzes, hergestellt durch Polymerisation von

2.1) 5 - 50 Gew.-% Acrylnitril, Methacrylnitril, Maleinsäureanhydrid, N-substituiertem Maleinimid oder Mischungen daraus und

2.2) 95 - 50 Gew.-% Styrol, α-Methylstyrol, kernsubstituiertem Styrol, Methylmethacrylat oder Mischungen daraus und

II. 0,1 bis 1 Gew.-Teilen Polyarlyensulfid.

2. Thermoplastische Formmassen gemäß Anspruch 1, enthaltend Polyphenylensulfid.

3. Verfahren zur Herstellung von ABS-Formmassen gemäß Anspruch 1, dadurch gekennzeichnet, daß man 0,1 bis 1 Gew.-Teile Polyarylensulfid zu 100 Gew.-Teilen ABS-Polymerisat gibt und bei einer Temperatur von 100 °C bis 300 °C einmischt.

4. Verfahren zur Herstellung von ABS-Formmassen gemäß Anspruch 3, dadurch gekennzeichnet, daß als Polyarylensulfid Polyphenylensulfid eingesetzt wird.

**Patentansprüche für folgenden Vertragsstaat : ES**

1. Verfahren zur Herstellung von ABS-Formmassen, dadurch gekennzeichnet, daß man 0,1 bis 1 Gew.-Teile (bezogen auf ABS-Polymerisat) Polyarylensulfid und 100 Gew.-Teile eines ABS-Polymerisats bestehend aus

1.) 5 - 100 Gew.-% eines Pfropfmischpolymerisats, hergestellt durch Pfropfpolymerisation von

1.1) 5 - 90 Gew.-% einer Mischung aus

1.1.1) 5 - 50 Gew.-% Acrylnitril, Methacrylnitril, Maleinsäureanhydrid, N-substituiertem Maleinimid oder Mischungen daraus und

1.1.2) 95 - 50 Gew.-% Styrol, α-Methylstyrol, kernsubstituiertes Styrol, Methylmethacrylat oder Mischungen daraus auf

1.2) 95 - 10 Gew.-% eines Kautschuks mit einer Glasübergangstemperatur $T_G$ < 10 °C und

2.) 0 - 95 Gew.-% eines Thermoplastharzes, hergestellt durch Polymerisation von

2.1) 5 - 50 Gew.-% Acrylnitril, Methacrylnitril, Maleinsäureanhydrid, N-substituiertem Maleinimid oder Mischungen daraus und

2.2) 95 - 50 Gew.-% Styrol, α-Methylstyrol, kernsubstituiertem Styrol, Methylmethacrylat oder Mischungen daraus

vereinigt und bei einer Temperatur von 100 °C bis 300 °C intensiv vermischt.

2. Verfahren nach Anspruch 1, dadurch gekennzeichnet, daß man als Polyarylensulfid Polyphenylensulfid verwendet.

**Claims**

**Claims for the following Contracting States : DE, FR, GB, IT**

1. Thermoplastic moulding compounds from

I. 100 parts by wt. of an ABS polymer consisting of

1.) 5-100 wt. % of a graft copolymer produced by graft polymerization of

1.1) 5-90 wt. % of a mixture of

1.1.1) 5-50 wt. % acrylonitrile, methacrylonitrile, maleic anhydride, N-substituted maleimide or mixtures thereof and

1.1.2) 95-50 wt. % styrene, α-methylstyrene, ring-substituted styrene, methyl methacrylate or mixtures thereof on

1.2) 95-10 wt. % of a rubber with a glass transition temperature $T_G$ < 10 °C and

2.) 0-95 wt. % of a thermoplastic resin produced by polymerization of

2.1) 5-50 wt. % acrylonitrile, methacrylonitrile, maleic anhydride, N-substituted maleimide or mixtures thereof and

7

2.2) 95-50 wt. % styrene, $\alpha$-methylstyrene, ring-substituted styrene, methyl methacrylate or mixtures thereof and

II. 0.1 to 1 parts by wt. of poly(arylene sulphide).

2. Thermoplastic moulding compounds according to Claim 1, containing poly(phenylene sulphide).

3. Process for the production of ABS moulding compounds according to Claim 1, characterized in that 0.1 to 1 parts by wt. of poly(arylene sulphide) are added to 100 parts by wt. of ABS polymer and incorporated at a temperature of 100 °C to 300 °C.

4. Process for the production of ABS moulding compounds according to Claim 3, characterized in that poly(phenylene sulphide) is used as poly(arylene sulphide).

**Claims for the following Contracting State : ES**

1. Process for the production of ABS moulding compounds, characterized in that 0.1 to 1 parts by wt. (relative to ABS polymer) of poly(arylene sulphide) are combined with 100 parts by wt. of an ABS polymer consisting of

1.) 5-100 wt. % of a graft copolymer produced by graft polymerization of

1.1) 5-90 wt. % of a mixture of

1.1.1) 5-50 wt. % acrylonitrile, methacrylonitrile, maleic anhydride, N-substituted maleimide or mixtures thereof and

1.1.2) 95-50 wt. % styrene, $\alpha$-methylstyrene, ring-substituted styrene, methyl methacrylate or mixtures thereof on

1.2) 95-10 wt. % of a rubber with a glass transition temperature $T_G$ < 10 °C and

2.) 0-95 wt. % of a thermoplastic resin produced by polymerization of

2.1) 5-50 wt. % acrylonitrile, methacrylonitrile, maleic anhydride, N-substituted maleimide or mixtures thereof and

2.2) 95-50 wt. % styrene, $\alpha$-methylstyrene, ring-substituted styrene, methyl methacrylate or mixtures thereof and

mixed intensively at a temperature of 100 °C to 300 °C.

2. Process according to Claim 1, characterized in that poly(phenylene sulphide) is used as poly(arylene sulphide).

**Revendications**
**Revendications pour les Etats contractants suivants : DE, FR, GB, IT**

1. Matières à mouler thermoplastiques consistant en :

I. 100 parties en poids d'un polymère ABS consistant lui-même en :

1) 5 à 100 parties en poids d'un copolymère greffé préparé par polymérisation greffée de :

1.1) 5 à 90 % en poids d'un mélange de :

1.1.1.) 5 à 50 % en poids d'acrylonitrile, de méthacrylonitrile, d'anhydride maléique, d'un maléimide substitué à l'azote ou leurs mélanges et

1.1.2) 95 à 50 % en poids de styrène, d'$\alpha$-méthylstyrène, d'un styrène substitué dans le noyau, de méthacrylate de méthyle ou leurs mélanges, sur

1.2) 95 à 10 % en poids d'un caoutchouc présentant une température de transition du second ordre $T_G$ < 10 °C et

2) 0 à 95 % en poids d'une résine thermoplastique préparée par polymérisation de :

2.1) 5 à 50 % en poids d'acrylonitrile, de méthacrylonitrile, d'anhydride maléique, d'un maléimide substitué à l'azote ou leurs mélanges et

2.2) 95 à 50 % en poids de styrène, d'$\alpha$-méthylstyrène, d'un styrène substitué dans le noyau, de méthacrylate de méthyle ou leurs mélanges et

II. 0,1 à 1 partie en poids d'un sulfure de polyarylène.

2. Matières à mouler thermoplastiques selon la revendication 1, contenant un sulfure de polyphénylène.

**3.** Procédé de préparation des matières à mouler ABS selon la revendication 1, caractérisé en ce que l'on mélange 0,1 à 1 partie en poids d'un sulfure de polyarylène à 100 parties en poids du polymère ABS à des températures de 100 à 300°C.

**4.** Procédé de préparation des matières à mouler ABS selon la revendication 3, caractérisé en ce que l'on utilise en tant que sulfure de polyarylène un sulfure de polyphénylène.

**Revendications pour l'Etat contractant suivant : ES**

**1.** Procédé de préparation de matières à mouler ABS, caractérisé en ce que l'on combine 0,1 à 1 partie en poids (par rapport au polymère ABS) d'un sulfure de polyarylène et 100 parties en poids d'un polymère ABS consistant luimême en :
  1) 5 à 100 % en poids d'un copolymère greffé préparé par polymérisation greffée de :
    1.1) 5 à 90 % en poids d'un mélange de :
      1.1.1.) 5 à 50 % en poids d'acrylonitrile, de méthacrylonitrile, d'anhydride maléique, d'un maléimide substitué à l'azote ou leurs mélanges et
      1.1.2) 95 à 50 % en poids de styrène, d'$\alpha$-méthylstyrène, d'un styrène substitué dans le noyau, de méthacrylate de méthyle ou leurs mélanges, sur
    1.2) 95 à 10 % en poids d'un caoutchouc ayant une température de transition du second ordre $T_G$ < 10°C et
  2) 0 à 95 % en poids d'une résine thermoplastique préparée par polymérisation de :
    2.1) 5 à 50 % en poids d'acrylonitrile, de méthacrylonitrile, d'anhydride maléique, d'un maléimide substitué à l'azote ou leurs mélanges et
    2.2) 95 à 50 % en poids de styrène, d'$\alpha$-méthylstyrène, d'un styrène substitué dans le noyau, de méthacrylate de méthyle ou leurs mélanges,
et on soumet à mélange intensif à des températures de 100 à 300°C.

**2.** Procédé selon la revendication 1, caractérisé en ce que l'on utilise en tant que sulfure de polyarylène un sulfure de polyphénylène.